# EUROPÄISCHE PATENTANMELDUNG

(11) **EP 1 037 077 A2**
(43) Veröffentlichungstag der Anmeldung: **20.09.2000**
(21) Anmeldenummer: 00810101.6
(22) Anmeldetag: 04.02.2000
(51) Int. Cl.: G02B 6/38

(54) **Verfahren und Vorrichtung zum Konfektionieren eines Lichtwellenleiter-Endabschnittes**

(30) Priorität: 18.03.1999 CH 51599
(71) Anmelder: Bühler, Leo, 8820 Wädenswil (CH)
(72) Erfinder: Bühler, Leo, 8820 Wädenswil (CH)
(74) Vertreter: Patentanwaltsbüro Feldmann AG

(57) **Zusammenfassung**

Es wird ein Verfahren zum Konfektionieren eines Lichtwellenleiter-Endabschnittes, welcher aus einem polymeroptischen Faserkern mit einer Reflektionsgrenzschicht und einer darauf nicht trennbar aufgebrachten Kunststoff-Schutzschicht besteht, vorgeschlagen. Ein Lichtwellenleiter-Endabschnitt wird in die metallische Steckerhülse mit dem polymeroptische Faserkern (12) soweit in die Steckerhülse (2) eingeschoben wird, bis er mit dem freien Ende endständig die Steckerhülse (2) überragt. Der bestückte Lichwellenleiter-Endabschnitt wird nun in die Crimpeinheit eingefahren. Nach dem Zentrieren des Faserkernes in der Steckerhülse (2) wird der Crimpvorgang in mindestens zwei Crimpbereichen (31, 32) vorgenommen. Dies erfolgt in den zwei Crimpbereichen (31, 32) mit gegeneinander um einen Winkel versetzten Crimpstempel. Die Endbearbeitung des polymeroptischen Faserkerns endständig zur faseroptischen Kontaktfläche geschieht im gleichen Arbeitsgang ohne erneutes Einspannen des bestückten Lichwellenleiter-Endabschnittes.

## Beschreibung

Die Erfindung betrifft ein Verfahren und eine Vorrichtung zum Konfektionieren eines Lichtwellenleiter-Endabschnittes, welcher aus einem polymeroptischen Faserkern mit einer Reflektionsgrenzschicht und einer darauf nicht trennbar aufgebrachten Kunststoff- Schutzschicht besteht, nach den Oberbegriffen der unabhängigen Patentansprüche 1 und 6.

Zum Verbinden von Lichtwellenleitern sind verschiedene Methoden bekannt. Oft wird eine metallische Steckerhülse auf ein Ende eines Lichtwellenleiters aufgeschoben und gecrimpt, das heisst festgeklemmt. Die Technik des Crimpens bei Glasfaserkabeln ist relativ unproblematisch. Diese Kabel bestehen aus einem Glasfaserkern, einer zugfesten Gewebeschicht darum herum und einer schlauchartigen Ummantelung. Die zugfeste Gewebeschicht hat keine faseroptische Funktion und nur die Aufgabe, die auf das Glasfaserkabel wirkenden Kräfte, insbesondere auch Zugkräfte, aufzunehmen. Der beim Crimpen auf eine Hülse von aussen ausgeübte Pressdruck wird von der Gewebeschicht aufgenommen. Beispielsweise wird gemäss US 5'559'917 vor dem Crimpen von solchen Lichtwellenleitern diese Gewebeschicht, oft aus einem Kevlargewebe, über das Ende der schlauchartigen Ummantelung umgestülpt. Erst dann wird die Hülse auf das Ende aufgeschoben, wobei die Gewebeschicht nun einmal ausserhalb und einmal innerhalb der schlauchartigen Ummantelung vorhanden ist. Die Klemmung resp. Crimpung klemmt nun immer zwei Gewebeschichten und eine Ummantelungsschicht. Dadurch wird ein guter Halt der Hülse auf dem Lichtwellenleiter Endabschnitt erreicht. Weitere Verbesserungen ergeben sich durch einen gerippten Abschnitt an der Steckerhülse innenseitig im Bereich der Crimpung, wie dies aus EP 0 602 958 bekannt ist.

Bei Lichtwellenleiter mit einem polymeroptischen Faserkern kann diese Technik aber nicht einfach übernommen werden. Diese Lichtwellenleiter weisen andere und für bestimmte Zwecke viel besser geeignete optische Eigenschaften auf. Sie müssen aber anders aufgebaut sein. Der polymeroptische Faserkern besteht meistens aus Polymethylmetacrylat oder aus Polycarbonat. Der Faserkern ist untrennbar von einer Reflektionsgrenzschicht umfangen, welche für die Totalreflektion der im Faserkern geleiteten Lichtwellen nötig ist. Diese Cladding genannte Schicht besteht aus einem Polymer mit einem Brechungsindex, welcher höher ist als derjenige des Faserkernes. Auf dem Cladding ist untrennbar eine Schutzschicht aus Kunststoff aufgebracht. Sie besteht aus Kunstharz, einem Polymermaterial oder auch aus einem geeigneten Lack. Darum herum befindet sich eine schlauchartige Ummantelung, welche abgetrennt, resp. abisoliert werden kann. Sie dient zum Schutz vor chemischen und mechanischen Einflüssen. Weil diese Lichtwellenleiter die erwähnte Totalreflektion benötigen und die guten optischen Eigenschaften zu garantieren, darf die Reflektionsschicht nicht mechanisch beinträchtigt werden. Das bedeutet, dass die für Glasfaserkabel bekannten Crimpverbindungen nicht anwendbar sind. Die durch diese Verfahren erzeugten Druckstellen würden die Reflektion behindern und es entstünden erhebliche Verluste bei der optischen Uebertragung.

Aufgabe der Erfindung ist es, ein Verfahren zum Crimpen anzugeben, welches auch für diese Arten von Lichtwellenleiter geeignet ist. Dazu gehört auch eine Vorrichtung, welche die dafür notwendigen Bedingungen erfüllt.

Diese Aufgabe wird durch die in den Patentansprüchen angegebene Erfindung gelöst.

Ein zusätzlicher Vorteil der Erfindung ist, dass mit der Vorrichtung gemäss Anspruch 6 ein Lichtwellenleiter-Endabschnitt in einem Arbeitsgang gebrauchsfertig konfektioniert werden kann.

Die Erfindung wird nachstehend im Zusammenhang mit den Zeichnungen beschrieben. Es zeigen:
- Figur 1: Eine Ansicht der Crimpelemente von vorne;
- Figur 2: Aufsicht auf die Crimpelemente im Zusammenhang mit der Fräs- oder Schleifeinrichtung;
- Figur 3: Aufsicht auf die Crimpelemente im Zusammenhang mit der Fräs- oder Schleifeinrichtung mehr detailliert;
- Figur 4: eine erste Variante der Staucheinheit;
und
- Figur 5: eine zweite Variante der Staucheinheit.

Ein mit einem polymeroptischen Faserkern versehener Lichtwellenleiter-Endabschnitt wird mit Steckerelementen versehen. Die folgende Beschreibung gilt natürlich auch für alle anderen Wellenleiter, welche ähnliche mechanische Eigenschaften aufweisen und deren lichtwellenleitender Kern nicht oder nur minimal mechanisch beinflusst werden darf. Dazu wird gemäss Erfindung am Ende zuerst ein kurzes Stück der schlauchartigen Ummantelung entfernt. Dies geschieht analog zum Abisolieren eines elektrischen Leiters. Darauf wird das nun freie Ende, bestehend aus dem Faserkern mit der Reflektionsgrenzschicht und der untrennbar darauf angebrachten Schutzschicht in die zentrale Bohrung einer Steckerhülse von hinten eingeschoben. Auf der Vorderseite der Steckerhülse bei der Steckerfront ragt schliesslich das Lichtwellenleiter-Ende etwas heraus. Dann wird die Steckerhülse mit dem Endabschnitt in die Crimpvorrichtung eingefahren. Dies kann Stück um Stück von Hand geschehen. Besser aber ist eine Bestückung von Lichtwellenleiter-Endabschnitten mit den Steckerhülsen mit anschliessendem Einlegen in eine Haltematrize oder einen Greifer . Die Haltematrize oder der Greifer hält dann den bestückten Endabschnitt fest. Darauf wird die bestückte Haltematrize oder Greifer in die Crimpvorrichtung eingefahren. Auf diese Weise kann das Einfahren der Endabschitte in die Crimpvorrichtung automatisiert werden. Nun wird der optische Faserkern in der Steckerhülse zentriert. Dies erfolgt durch einwärts stauchen der Flanken des vorderen Endes der Steckerhülse mittels eines Stauchstempels. Dadurch wird der Lichtwellenleiter in der Steckerhülse reproduzierbar genau in die Mitte der Durchbohrung zentriert. Der Stauchstempel wird wieder weggefahren und es folgt der eigentliche Crimpvorgang. Ein Anpressdruck wird an die mindestens je zwei Crimpstempel in zwei oder mehr hintereinander liegenden Crimpbereichen der Steckerhülse angelegt. Dadurch wird die Steckerhülse mit ihrer inneren Oberfläche in zwei oder mehr hintereinander liegenden zylinderförmigen Crimpbereichen konzentrisch an den optischen Faserkern unter möglichst leichtem Druck angelegt. Der Anpressdruck wird kontrolliert und begrenzt. Die Druckbegrenzung sorgt dafür, dass weder Faserkern noch die Reflektionsgrenzschicht mechanisch beeinträchtigt werden. Dies ist ausserordentlich wichtig, weil andernfalls die optischen Eigenschaften des Lichtwellenleiters so stark beeinträchtigt werden könnten, dass unerwünschte optische Verluste entstehen. Die Crimpung in zwei oder mehr hintereinander liegenden Crimpbereichen garantiert einen genügenden Halt in der Steckerhülse, auch wenn nur ein minimaler Anpressdruck angelegt wird. Dies wird noch weiter optimiert, indem sowohl in ersten, wie im zweiten Crimpbereich mit einer Mehrzahl von Crimpstempel, bsp. je vier Crimpstempel verwendet werden und wenn diese sogar in der gleichen Achse gegeneinander um einen Winkel versetzt angeordnet sind. Bei dieser grossen Kontakt und Reibungsfläche zwischen Steckerhülse und dem Faserkern des Lichtwellenleiters genannter Art können die Anpressdrücke für das eigentliche Crimpen erheblich reduziert werden. Die Verbindung genügt jeden mechanischen Anforderungen für Steckerhülsenbefestigungen wobei der Faserkern mit der Reflexionsschicht beeinträchtigt wird. Nun erfolgt sogleich ohne jedes Umspannen die Endbearbeitung des Lichtwellenleiter-Endabschnittes. Dazu wird ein Diamant- oder Hartmetallfräskopf oder ein Diamantschleifkopf an das herausragende Ende des Lichtwellenleiter herangeführt. Anschliessend wird das Ende des Faserkerns mit der Reflektionsschicht und der darauf angebrachten Schutzschicht präzise plan gefräst resp. plan geschliffen. Nach dem Wegfahren des Diamantfräskopfes werden die Crimpstempel gelöst und die Matrize oder der Greifer mit den fertig konfektionierten Lichtwellenleiter-Endabschnitten kann aus der Konfektioniervorrichtung ausgefahren und die Endabschnitte aus der Haltematrize oder Greifer herausgenommen oder herausgefahren werden. Die Lichtwellenleiter-Endabschnitte sind nun gebrauchsbereit fertig konfektioniert.
Dadurch, dass der Vorgang der Endbearbeitung des faseroptischen Kernes erfolgt, solange das Ende des Lichtwellenleiters mit der Steckerhülse, nach der Zentrierung innerhalb der Hülse und nach dem eigentlichen Crimpvorgang, immer noch unverändert in der Crimpvorrichtung fixiert ist, erreicht man eine ausserordentlich hohe Präzision des freien Endes für den optischen Kontakt. Dies ist eine Voraussetzung, um
Steckverbindungen von Lichtwellenleitern zu erhalten, welche höchsten Anforderungen für die optische Uebertragungen genügen. Jedes Wechseln oder Verändern der Einspannung oder der Position kann zu Ungenauigkeiten führen und allenfalls sogar zu Beschädigung der Reflektionsschicht. Nach der Bearbeitung des Endes wird der Lichtwellenleiter mit der aufgecrimpten Steckerhülse aus der Crimpvorrichtung entfernt.

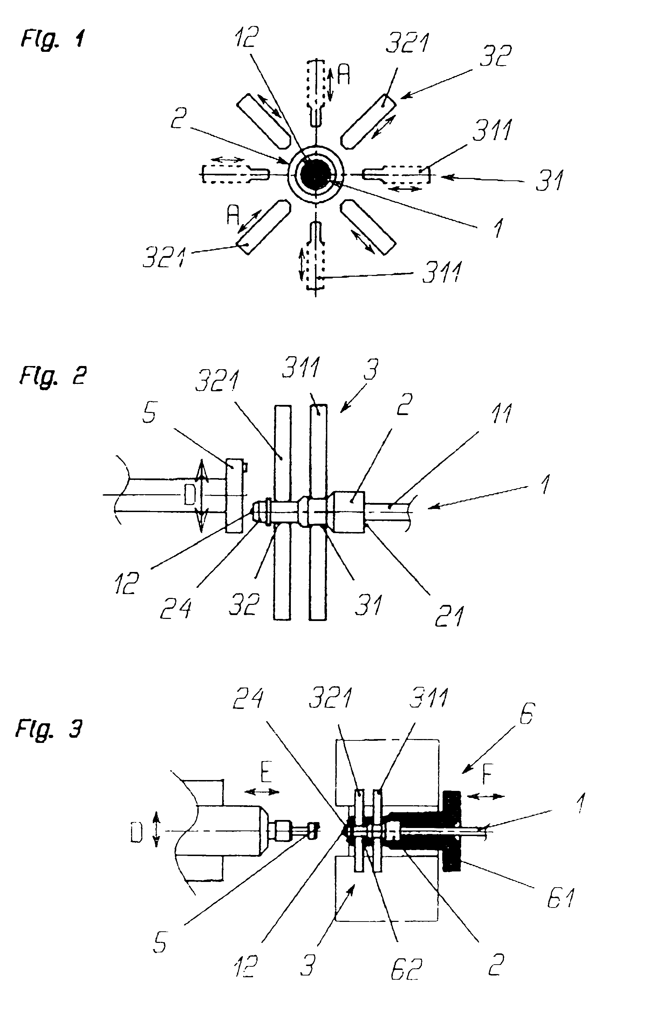

Eine Ansicht von vorne auf die Crimpbereiche der Konfektioniervorrichtung ist in der Figur 1 gezeigt. Ein polymeroptischer Faserkern 12 mit der Reflektionsschicht und der untrennbar darauf angebrachten Schutzschicht eines Lichtwellenleiters 1 ist in eine Steckerhülse 2 eingelegt. Vier erste radial angeordnete Crimpstempel 31 sind gleichmassig über den Umfang des abisolierten Lichtwellenleiters 1 verteilt. Sie entsprechen dem ersten Crimpbereich. Dahinter befinden sich vier zweite radial angeordnete Crimpstempel 32 im zweiten Crimpbereich. Die ersten Crimpstempel 31 sind gegenüber den zweiten Crimpstempel 32 in der gleichen Achse um einen Winkel verdreht. Statt je vier Crimpstempel kann auch eine andere Anzahl gewählt werden, es müssen aber mindestens je zwei sein, damit die Zentrierung genau genug und die Crimpklemmung genügend fest wird. Die Crimpstempel sind radial in der Richtung A verschiebbar, so dass die Crimpbereiche zuerst eine Oeffnung aufweisen, in welche die bestückte Steckerhülse 2 mit der Matrize oder dem Greifer einfahren kann. Die Crimpstempel 31, 32 werden soweit zusammengefahren, dass die Steckerhülse 2 zentrisch gehalten ist, Beim eigentlichen Crimpvorgang werden sie dann radial noch etwas weiter gegeneinander zusammengeschoben, bis der gewünschte Anpressdruck erreicht ist.

Aus der Figur 2 ist die Anordnung der Crimppresse 3 mit dem ersten Crimpbereich 31 und dem zweiten Crimpbereich 32 bei eingelegter und erfasster Steckerhülse 2 gut ersichtlich. In die Steckerhülse 2 ist von hinten ein Lichtwellenleiter 1 eingeschoben. Dabei überragt das abisolierte Ende des Faserkernes 12 die Steckerhülse 2 am freien Ende an der Steckerfront 24. Der zweite Crimpbereich 32 befindet sich nahe bei der Steckerfront 24 der Steckerhülse 2. Zwischen der Einführung des Lichtwellenleiters 1 in die Steckerhülse 2 und dem zweiten Crimpbereich 32 befindet sich der erste Crimpbereich 31. Im Abstand von der Steckerfront 24 ist ein Diamantfräskopf 5 angeordnet. Er kann seitwärts so verschoben werden, dass das die Steckerfront 24 überragende Ende des Faserkernes 12 bearbeitet und dabei rechtwinklig zur Längsachse der Steckerhülse 2 plan gefräst oder geschliffen wird.

In der Figur 3 ist der in eine Steckerhülse 2 eingeschobene Lichtwellenleiter in eine Haltematrize oder Greifer 6 eingelegt und wird so in Richtung F in die Crimppresse eingeführt. Die mit einem oder mehreren Lichtwellenleiter-Endabschnitten bestückte Haltematrize oder Greifer 6 wird in der Crimppresse positioniert. Alsdann kommt die Crimpvorrichtung zum Einsatz und der beschriebene Vorgang läuft ab. Die Crimpstempei 311 und 321 durchdringen Durchbohrungen 62, welche in Halbschalen 61 der Haltematrize oder im Greifer an den entsprechenden Stellen vorhanden sind und bewirken so die Crimpung der Steckerhülse 2. Diese Art ist besonders von Vorteil, wenn die Konfektionierungsvorrichung mit einem Beschickungsautomaten ergänzt wird. Bei weiterer Automatisierung kann der Hartmetall-oder Diamantfräskopf oder Diamantschleifkopf 5 nicht nur rechtwinklig zur Achse der eingelegten Steckerhülse 2 in der Richtung D, sondern auch noch in der Richtung E an die freien Enden des Lichtwellenleiters 1 heranfahren. Ein Konfektionierautomat kann unter Verwendung aller dieser Möglichkeiten eine sehr hohe Leistung erzielen und in einem einzigen Arbeitsgang eine Vielzahl von Lichtwellenleiter-Endabschnitten zu fertigen steckbaren Einheiten konfektionieren.

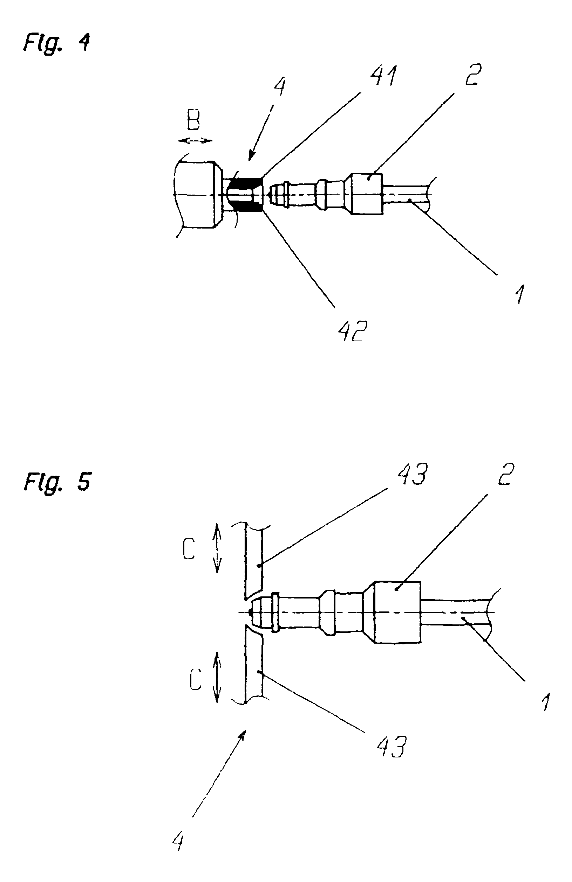

Eine Variante der Stauch- und Zentriereinheit 4 ist aus der Figur 4 ersichtlich. Dabei wird ein Stauchzylinder 41 mit entsprechend angefasten Stauchflanken 42 auf das freie Ende der Steckerhülse 2 in Richtung B aufgeschoben. Dabei wird die Steckerhülse 2 an diesem Ende durch den Druck des Stauchzylinders minimal zentrisch nach innen gestaucht und somit der Faserkern 12 mit der Reflektionsschicht und der nicht trennbaren Schutzschicht zentriert. Der Faserkern des Endabschnittes wird so ohne Druck auf seine äussere Oberfläche mit absolut minimalem Spiel rein formschlüssig darin zentriert und gehalten.

Bei der Variante nach Figur 5 weist die Stauch- und Zentriereinheit 4 keinen Stauchzylinder 41 auf. Hier sind gleichmässig über den Umfang verteilt eine Anzahl radial angeordnete Stauchstempel 43 mit ebenfalls angefasten Stauchflanken 42 vorhanden. Diese werden radial in Richtung C ans Ende der Steckerhülse 2 herangefahren. Die Zentrierung des Faserkerns in der Steckerhülse erfolgt analog zur ersten Variante. Der Faserkern des Endabschnittes wird so ohne Druck auf seine äussere Oberfläche mit absolut minimalem Spiel rein formschlüssig darin zentriert und gehalten.

Weiter Verbesserungen sind möglich, indem mehrere solche Vorrichtungen zum Konfektionieren nebeneinander in einer Reihe angeordnet werden. Diese können mittels einem Beschickungsautomaten zum Beschicken mit Steckerhülsen 2 und mit abisolierten Lichtwellenleiter-Endabschnitten zu Konfektionierstrassen mit Vollautomaten ergänzt werden.

## Patentansprüche

1. Verfahren zum Konfektionieren eines Lichtwellenleiter-Endabschnittes, welcher aus einem polymeroptischen Faserkern mit einer Reflektionsgrenzschicht und einer darauf nicht trennbar aufgebrachten Kunststoff-Schutzschicht besteht, unter Crimpen einer metallischen Steckerhülse auf den Lichtwellenleiter-Endabschitt, wobei der Lichtwellenleiter-Endabschnitt in die metallische Steckerhülse einseitig eingeschoben wird, dadurch gekennzeichnet, dass in einer Konfektioniervorrichtung der polymeroptische Faserkern des Lichtwellenleiter-Endabschnittes mit der Steckerhülse bestückt wird, indem er soweit in die Steckerhülse eingeschoben wird, bis er mit dem freien Ende endständig die Steckerhülse überragt, wonach der bestückte Lichtwellenleiter-Endabschnitt in eine Crimpvorrichtung eingefahren und gehalten wird, wonach der Faserkern ef in der Steckerhülse zentriert wird, indem diese am freien Ende gestaucht wird und worauf der Crimpvorgang in mindestens zwei Crimpbereichen erfolgt, wobei die Steckerhülse nahe beim freien Ende in einem ersten Crimpbereich und zwischen dem ersten Crimpbereich und der Einführung für den Lichtwellenleiter-Endabschnitt in einem zweiten Crimpbereich mittels mindestens zwei radial verschiebbaren Crimpstempel je Crimpbereich verpresst wird, worauf das überstehende Ende des polymeroptischen Faserkerns endständig zur faseroptischen Kontaktfläche plan geschliffen oder plan gefräst wird und schliesslich der fertig konfektionierte Lichtwellenleiter-Endabschnitt aus der Crimpvorrichtung ausgefahren wird.

2. Verfahren nach Anspruch 1, dadurch gekennzeichnet, dass mindestens ein, mit einer Steckerhülse bestückte, Lichtwellenleiter-Endabschnitt in eine Haltematrize oder Greifer eingelegt wird, worauf die Haltematrize oder Greifer in die Crimpvorrichtung eingefahren wird.

3. Verfahren nach Anspruch 1, dadurch gekennzeichnet, dass während der Verpressung die Druckkräfte der Crimpbereiche kontinuierlich gemessen werden.

4. Verfahren nach Anspruch 3, dadurch gekennzeichnet, dass die Druckkräfte in den Crimpbereichen begrenzt werden, sobald die Messung der Druckkräfte einen Wert ergibt, welcher für die mechanische Verbindung von Lichtwellenleiter-Endabschnitt und Steckerhülse genügt ohne den Lichtwellenleiter-Faserkern mechanisch zu belasten.

5. Verfahren nach Anspruch 1, dadurch gekennzeichnet, dass die endständige Oberfläche des Faserkernes durch Diamantfräsen oder Diamantschleifen erzeugt wird, ohne Wechseln des Einspannens oder Wechseln der Position in der Konfektioniervorrichtung.

6. Vorrichtung zum Konfektionieren eines Lichtwellenleiter-Endabschnittes zu einem steckbaren Steckerelement, mittels Crimpen einer metallischen Steckerhülse (2) auf einen Lichtwellenleiter-Endabschitt, welcher aus einem polymeroptischen Faserkern (12) mit einer Reflektionsgrenzschicht und einer darauf nicht trennbar aufgebrachten Kunststoff Schutzschicht besteht, wobei der Lichwellenleiter-Endabschnitt in die metallische Steckerhülse (2) einseitig soweit eingeschoben ist, dass der polymeroptische Faserkern (12) mit dem freien Ende aus der Steckerhülse (2) ragt, dadurch gekennzeichnet, dass die Konfektioniervorrichtung mindestens einen ersten Crimpbereich (31) und einen zweiten Crimpbereich (32) in Längsrichtung der Steckerhülse (2) hintereinander angeordnet aufweist, wobei jeder Crimpbereich (31, 32) mindestens zwei sich radial gegenüberliegende Crimpstempel (311, 321) aufweist.

7. Konfektioniervorrichtung nach Anspruch 6, dadurch gekennzeichnet, dass die Crimpstempel (321) des zweiten Crimpbereiches (32) gegenüber den Crimpstempel (311) des ersten Crimpbereiches um einen Winkel in der gleichen Achse versetzt sind.

8. Konfektioniervorrichtung nach Anspruch 7, dadurch gekennzeichnet, dass mindestens ein Druckaufnehmer zum Messen des Anpressdruckes vorhanden ist.

9. Konfektioniervorrichtung nach Anspruch 6, dadurch gekennzeichnet, dass eine Zentriervorrichtung (4) zum Zentrieren des Faserkerns in der Steckerhülse (2) durch Stauchen des freien Endes der Steckerhülse (2) vorhanden ist.

10. Konfektioniervorrichtung nach Anspruch 11, dadurch gekennzeichnet, dass die Bearbeitungsstation eine Diamantfräsvorrichtung, eine Hartmetallfräsvorrichtung oder eine Diamantschleifvorrichtung zum Bearbeiten der endständigen Oberfläche des faseroptischen Kernes (12) des Lichtwellenleiters (1) ist.
